# EUROPÄISCHE PATENTANMELDUNG

(11) **EP 4 000 714 A1**
(43) Veröffentlichungstag der Anmeldung: **25.05.2022**
(21) Anmeldenummer: 20020522.7
(22) Anmeldetag: 11.11.2020
(51) Int. Cl.: B01D 53/14, B01D 53/26, C10K 1/00

(54) **VERFAHREN UND ANLAGE ZUR HERSTELLUNG VON WASSERSTOFF UND ZUR ABTRENNUNG VON KOHLENDIOXID AUS SYNTHESEGAS**

(71) Anmelder: L'Air Liquide Société Anonyme pour l'Etude et l'Exploitation des Procédés Georges Claude, 75321 Paris (FR)
(72) Erfinder: Schmidt, Sophia, 60439 Frankfurt am Main (DE); Linicus, Matthias, 60439 Frankfurt am Main (DE)
(74) Vertreter: Stang, Stefan

(57) **Zusammenfassung**

Die vorliegende Erfindung betrifft ein Verfahren zur Herstellung von Wasserstoff und zur Abtrennung von Kohlendioxid aus Synthesegas mit Hilfe eines physikalisch wirkenden Absorptionsmittels. Das Verfahren weist die Schritte auf, dass das Synthesegas und das Absorptionsmittel gekühlt werden; Kohlendioxid aus dem gekühlten Synthesegas durch das gekühlte Absorptionsmittel in einem physikalischen Absorptionsschritt bei erhöhtem Druck entfernt wird; beladenes Absorptionsmittels in einer Mehrzahl von flash-Stufen behandelt wird, wobei mitabsorbiertes Kohlenmonoxid, Wasserstoff und Kohlendioxid getrennt aus dem beladenen Absorptionsmittel entfernt werden; Wasserstoff aus von Kohlendioxid befreitem Synthesegas in einem physikalischen Trennschritt abgetrennt wird, wobei Wasserstoff als Produktgas sowie ein Wasserstoff, Kohlenmonoxid und Kohlendioxid aufweisendes Abgas erhalten werden; Abgas und durch flashen erhaltenes Kohlenmonoxid und Wasserstoff auf Absorptionsdruck verdichtet und zum Absorptionsschritt rückgeführt werden; Produktgas Wasserstoff und Kohlendioxid aus dem Verfahren ausgeschleust werden. Die Erfindung betrifft ferner eine Anlage zur Durchführung des Verfahrens.

## Beschreibung

### Gebiet der Erfindung

Die Erfindung betrifft ein Verfahren zur Herstellung von Wasserstoff und zur Abtrennung von Kohlendioxid aus Synthesegas. Die Erfindung betrifft weiterhin eine Anlage zur Herstellung von Wasserstoff und zur Abtrennung von Kohlendioxid aus Synthesegas.

### Stand der Technik

Die Herstellung von Wasserstoff auf Basis fossiler Einsatzstoffe umfasst häufig einen Reformierungsschritt für die Synthesegaserzeugung aus einem gasförmigen fossilen Einsatzstoff wie Erdgas, eine Wassergas-Shift-Einheit zur Erhöhung der Wasserstoffausbeute und eine Wasserstoff-Reinigungsstufe auf Basis einer Druckwechseladsorption (*pressure swing adsorption* - PSA). Typische Reformierungsschritte sind die Reformierung von Erdgas mit Dampf (*steam methane reforming* - SMR), autotherme Reformierung (ATR), partielle Oxidation (POx), Kombinationen davon oder gasbeheizte Reformierung (GHR).

In jedem der genannten Reformierungsschritte und insbesondere bei der Wassergas-Shift-Reaktion fällt Kohlendioxid (CO₂) als Nebenprodukt an. Zur Vermeidung von CO₂-Emissionen sollte dieses Kohlendioxid möglichst effektiv aus dem Verfahren abgeschieden und anschließend entweder einer langfristigen Lagerung (*carbon capture and storage* - CCS) oder einer weiteren Verwertung (*carbon capture and utilization* - CCU) zugeführt werden.

Zur Kohlendioxidabscheidung kommen beispielsweise Gaswäscheverfahren zum Einsatz, in welchen Lösungsmittel das abzuscheidende Gas chemisch binden (chemische Absorption). Ein solches Verfahren ist beispielsweise in der EP 3 362 406 beschrieben. Die für die chemische Absorption verwendeten Lösungsmittel sind in den meisten Fällen wässrige Lösungen von Aminen oder Aminoalkoholen, wie beispielsweise Methyldiethanolamin (MDEA). Aufgrund der starken chemischen Bindung zwischen dem basischen Amin / Aminoalkohol und dem sauren Zielmolekül Kohlendioxid ist ein hoher Energieaufwand erforderlich, um das Lösungsmittel zu regenerieren, also das Lösungsmittel wieder vom chemisch gebunden Kohlendioxid zu befreien.

EP 2 683 465 beschreibt ein Verfahren zur Abscheidung von Kohlendioxid, welches eine physikalische Gaswäsche mit der anschließenden Kondensation von Kohlendioxid kombiniert. Für die Kondensation des Kohlendioxids wird ein kohlendioxidreiches Gas in mehreren Schritten bis zum Erreichen des Tripelpunkts gekühlt und komprimiert. Der verflüssigte Kohlendioxid-Strom kann anschließend von den übrigen Gasen abgetrennt werden. Die Kühlung und Komprimierung des Kohlendioxid bis zum Tripelpunkt, zur Abtrennung des Kohlendioxids von den übrigen Gasen, ist apparatetechnisch aufwändig und mit einem hohen Energieaufwand verbunden.

EP 1 804 956 offenbart ein Verfahren zur Rückgewinnung von trockenem Kohlendioxid hoher Reinheit aus einem Wasserstoffproduktionsverfahren. Gemäß diesem Verfahren wird ein unter Druck stehendes, kohlendioxidreiches Gas aus einer Wasserstoffrückgewinnungsstufe zunächst gekühlt und anschließend Kohlendioxid kondensiert. Das verbleibende Kohlendioxid wird anschließend durch physikalische Absorption in Methanol entfernt. Das mit Kohlendioxid beladene Methanol wird durch schrittweise Druckreduktion regeneriert und zu einem Absorber zurückgeführt. Der Nachteil dieses Verfahrens besteht wiederum darin, dass der Großteil des Kohlendioxids durch energieaufwändige und apparatetechnisch aufwändige Kondensation von den übrigen Gasen abgetrennt werden muss.

### Beschreibung der Erfindung

Allgemein ist es eine Aufgabe der vorliegenden Erfindung, die vorgenannten Nachteile des Standes der Technik zu überwinden.

Insbesondere besteht eine Aufgabe der vorliegenden Erfindung darin ein Verfahren vorzuschlagen, welches die Abscheidung des Großteils des bei der Wasserstoffproduktion anfallenden Kohlendioxids als Kohlendioxidprodukt von hoher Reinheit ermöglicht.

Dabei sollte der Energieaufwand möglichst reduziert werden. Insbesondere sollte das Verfahren keinen unbedingt erforderlichen technischen Schritt zur Abtrennung von Kohlendioxid durch Verflüssigung umfassen, da die Verflüssigung von Kohlendioxid mittels wiederholter Kompression und Abkühlung mit einem hohen Energieaufwand sowie einem hohen apparatetechnischen Aufwand verbunden ist.

Eine weitere Aufgabe der vorliegenden Erfindung besteht darin eine Anlage vorzuschlagen, welche zumindest eine der vorgenannten Aufgaben zumindest teilweise löst.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Erfindung betrifft eine Verfahren zur Herstellung von Wasserstoff aus Synthesegas. Das Verfahren umfasst ferner die Abtrennung von Kohlendioxid aus diesem Synthesegas.

Die Aufgaben der Erfindung werden zumindest teilweise gelöst durch ein Verfahren zur Herstellung von Wasserstoff (H₂) und zur Abtrennung von Kohlendioxid aus Synthesegas, umfassend die folgenden Verfahrensschritte:
(a) Bereitstellen von Synthesegas, wobei das Synthesegas zumindest Wasserstoff (H₂), Kohlenmonoxid (CO) sowie Kohlendioxid (CO₂) beinhaltet;
(b) Bereitstellen eines physikalisch wirkenden Absorptionsmittels;
(c) Kühlen des Synthesegases und des Absorptionsmittels;
(d) Entfernen von Kohlendioxid aus dem gekühlten Synthesegas durch das gekühlte Absorptionsmittel in einem physikalischen Absorptionsschritt bei erhöhtem Druck, wobei das gekühlte Synthesegas und das gekühlte Absorptionsmittel im Gegenstrom geführt werden, wobei zumindest teilweise von Kohlendioxid befreites Synthesegas erhalten wird, sowie mit Kohlendioxid und teilweise mitabsorbiertem Kohlenmonoxid und Wasserstoff beladenes Absorptionsmittel erhalten wird;
(e) Behandeln des beladenen Absorptionsmittels in einer Mehrzahl hintereinander geschalteter flash-Stufen, wobei in zumindest einer ersten flash-Stufe mitabsorbiertes Kohlenmonoxid und Wasserstoff aus dem beladenen Absorptionsmittel entfernt wird, und in einer der ersten flash-Stufe nachgeschalteten flash-Stufe Kohlendioxid aus dem beladenen Absorptionsmittel entfernt wird;
(f) Abtrennen von Wasserstoff aus dem zumindest teilweise von Kohlendioxid befreiten Synthesegas in einem physikalischen Trennschritt, wobei Wasserstoff als Produktgas sowie ein Wasserstoff, Kohlenmonoxid und Kohlendioxid aufweisendes Abgas erhalten werden;
(g) Verdichten auf Absorptionsdruck und zumindest teilweises Rückführen des in Schritt (f) erhaltenen Abgases und des in Schritt (e) erhaltenen Kohlenmonoxid und Wasserstoff zu Schritt (d);
(h) Ausschleusen des in Schritt (f) erhaltenen Produktgases (Wasserstoff) und des in Schritt (e) erhaltenen Kohlendioxid aus dem Verfahren.

Die vorgenannten Schritte (a) bis (h) müssen nicht zwangsläufig in der genannten Reihenfolge durchgeführt werden.

Das erfindungsgemäße Verfahren zeichnet sich insbesondere dadurch aus, dass sowohl im Absorptionsschritt (d) mitabsorbierte Wertgase wie Wasserstoff und Kohlenmonoxid nach deren Desorption in einer zumindest ersten flash-Stufe gemäß Schritt (e) zu Schritt (d) zurückgeführt werden, als auch das in Schritt (g) erhaltene Abgas, welches signifikante Mengen an Wertgasen (Wasserstoff und Kohlenmonoxid) und Kohlendioxid enthält, zu Schritt (d) zurückgeführt wird. Durch diese Kombination gemäß Schritt (g) wird einerseits die Wasserstoffausbeute über alle Verfahrensschritte maximiert. Gleichzeitig wird die Menge des abgeschiedenen Kohlendioxids maximiert, wobei gleichzeitig ein Kohlendioxidprodukt von hoher Reinheit erhalten wird.

Gemäß Schritt (g) wird eine Teilmenge oder die Gesamtmenge des in Schritt (f) erhaltenen Abgases zu Schritt (d) zurückgeführt. Ferner wird gemäß Schritt (g) eine Teilmenge oder die Gesamtmenge des in Schritt (e) erhaltenen Kohlenmonoxid und Wasserstoff zu Schritt (d) zurückgeführt, vorzugsweise die Gesamtmenge zu Schritt (d) zurückgeführt.

Die Verwendung eines physikalischen Absorptionsmittels ermöglicht dessen Regeneration nach der Absorption von Kohlendioxid durch einen einfachen, nicht energieintensiven flash-Schritt. Dabei werden vom Absorptionsmittel zwangsläufig und nicht vermeidbar mitabsorbierte Wertgase (Wasserstoff, Kohlenmonoxid) in zumindest einer ersten flash-Stufe entfernt. Das so teilregenerierte Absorptionsmittel wird einer der ersten flash-Stufe nachgeschalteten flash-Stufe zugeführt. Zu diesem Zeitpunkt enthält das beladene Absorptionsmittel hauptsächlich noch Kohlendioxid als absorbierte Gaskomponente. Das in der nachgeschalteten flash-Stufe desorbierte Gas enthält daher nahezu ausschließlich Kohlendioxid.

Unter "Flashen", einen "flash-Schritt" oder eine "flash-Stufe" versteht der Fachmann die Regeneration des Absorptionsmittels, also Desorption physikalisch gebundener Gase aus dem Absorptionsmittel, durch Druckabsenkung.

Die Absorption von Kohlendioxid in einem physikalisch wirkenden Absorptionsmittel und anschließende Regeneration durch Druckabsenkung reicht aus, um hohe Kohlendioxidabscheidungsraten aus dem Synthesegas zu erzielen. Insbesondere reicht dieses Vorgehen aus, um hohe Kohlendioxidabscheidungsraten aus einem wasserstoffreichen Synthesegas zu erzielen. Insbesondere wird ein wasserstoffreiches Synthesegas durch eine Wassergas-Shift (WGS) von standardmäßig produziertem Synthesegas erhalten.

Unter einem physikalisch wirkenden Absorptionsmittel wird ein Absorptionsmittel verstanden, bei dem die Löslichkeit der absorbierten Gase im Absorptionsmittel durch physikalische Wechselwirkungen bewirkt werden. Insbesondere wird die Absorption im physikalisch wirkenden Absorptionsmittel nicht durch chemische Wechselwirkungen bewirkt, wie beispielsweise eine Säure-Base-Wechselwirkung, insbesondere eine Wechselwirkung im Sinne einer Bindung einer Lewis-Säure an eine Lewis-Base.

Im Vergleich zur chemischen Absorption von Kohlendioxid an basischen, insbesondere aminischen Lösungsmitteln, wird in einem flash-Schritt keine Energie zur Entfernung des Kohlendioxids vom Absorptionsmittel benötigt. Dies führt zu einer Reduktion der Betriebskosten der Anlage (OPEX). Gleichzeitig sinken auch die Investitionskosten, da weniger Anlagenbauteile wie Heißregenerationskolonnen, Wärmeaustauscher für beladenes/regeneriertes Lösungsmittel und Aufkocher benötigt werden.

Die Absorption von Kohlendioxid im physikalisch wirkenden Absorptionsmittel gemäß Schritt (d) wird bei erhöhtem Druck durchgeführt. Insbesondere wird der Absorptionsschritt (d) bei einem Absolut-Druck von 10 bis 100 bar durchgeführt, vorzugsweise bei 20 bis 60 bar. Ein dadurch resultierender hoher Kohlendioxid-Partialdruck (Absorption unter hohem Druck) begünstigt die physikalische Absorption durch das Absorptionsmittel, während die Absorptionskapazität bei einer chemischen Absorption alleine von der Menge oder Konzentration des angebotenen Absorptionsmittels abhängt. Bei einer Absorption durch chemische Absorptionsmittel kann die Absorptionskapazität somit nicht durch die Erhöhung des Drucks gesteigert werden.

Zur Verbesserung der Absorptionskapazität des Absorptionsmittels wird das Absorptionsmittel neben dem zu behandelnden Synthesegas gemäß Schritt (c) gekühlt. Die Zieltemperatur beim Kühlen des Absorptionsmittels hängt dabei von den physikalischen Eigenschaften des Absorptionsmittels ab, wie beispielsweise
- dem Schmelzpunkt,
- der Temperaturabhängigkeit von der Viskosität, und
- der Abhängigkeit der Kohlendioxid-Absorptionskapazität von der Temperatur.

Wird beispielsweise N-Methyl-2-pyrrolidon (NMP) als Absorptionsmittel verwendet, wird dieses auf eine Temperatur von nicht weniger als 0 °C gekühlt. Wird beispielsweise Methanol als Absorptionsmittel verwendet, wird dieses auf eine Temperatur von vorzugsweise weniger als - 30 °C gekühlt.

Eine Ausführungsform des erfindungsgemäßen Verfahrens ist dadurch gekennzeichnet, dass der physikalische Trennschritt eine Druckwechsel-Adsorption beinhaltet.

Schritt (f) beinhaltet vorzugsweise einen Druckwechsel-Adsorptionsschritt zur Abtrennung von Wasserstoff aus dem zumindest teilweise von Kohlendioxid befreiten Synthesegas. Dabei fällt Wasserstoff als reines Produktgas an, während das Abgas des Druckwechseladsorptionsschritts Wasserstoff, Kohlenmonoxid, Kohlendioxid und optional weitere Gasbestanteile wie Methan und Stickstoff enthält. Der Druckwechseladsorptionsschritt wird in einer Vorrichtung für Druckwechseladsorption (*pressure swing adsorption,* PSA) durchgeführt.

Genau genommen werden bei einer Druckwechseladsorption Kohlenmonoxid und Kohlendioxid sowie gegebenenfalls weitere Gasbestandteile von Wasserstoff abgetrennt. Wasserstoff bindet als leichte Komponente nicht oder zumindest weniger stark am Adsorbens des Festbetts einer Druckwechseladsorptionsvorrichtung. Stärker binden die anderen, "schweren" Gasbestanteile am Festbett und werden so durch fortlaufende zyklische Adsorptions- und Desorptionsvorgänge vom Wasserstoff abgetrennt. Am Ende eines jeden Zyklus werden die adsorbierten Komponenten durch Druckabsenkung vom Adsorbens des Festbetts einer Druckwechseladsorptionsvorrichtung entfernt und als Abgas aus der Druckwechseladsorptionsvorrichtung ausgeschleust.

Eine Ausführungsform des erfindungsgemäßen Verfahrens ist dadurch gekennzeichnet, dass in Schritt (f) erhaltenes Abgas und in Schritt (e) erhaltenes Kohlenmonoxid und Wasserstoff über einen gemeinsamen Gaskompressor auf Absorptionsdruck verdichtet und zu Schritt (d) zurückgeführt werden.

Durch die Nutzung eines gemeinsamen Gaskompressors für die Rückverdichtung auf Absorptionsdruck wird eine Verfahrensführung ermöglicht, welche die Betriebskosten (OPEX) und Investitionskosten (CAPEX) minimiert.

Eine Ausführungsform des erfindungsgemäßen Verfahrens ist dadurch gekennzeichnet, dass in Schritt (f) erhaltenes Abgas teilweise als Brennstoff bei der Herstellung des Synthesegases genutzt wird.

Wird gemäß Schritt (g) nicht die vollständige Menge, sondern nur eine Teilmenge des Abgases zu Schritt (d) zurückgeführt, kann der verbleibende Teil als Brennstoff bei der Herstellung des Synthesegases genutzt werden. Dies umfasst die Nutzung als Brenngas, beispielsweise für einen Brenner bei der Synthesegaserzeugung mittels SMR oder ATR. Weiterhin umfasst dies die Nutzung als Brenngas innerhalb einer befeuerten Heizeinheit, in welcher die Verbrennungsgase des Brennstoffs als Medium zum Beheizen von Prozessströmen genutzt werden.

Die Nutzung des Abgases als Brennstoffs erlaubt eine Flexibilisierung des Verfahrens. Je nachdem welche Mengen an Brennstoff innerhalb eines Anlagenkomplexes zu einem bestimmten Zeitpunkt benötigt werden, kann die Menge des als Brennstoff abgezweigten Abgases variiert werden. Dadurch können beispielsweise Schwankungen bei der Versorgung mit Brennstoff ausgeglichen werden.

Eine Ausführungsform des erfindungsgemäßen Verfahrens ist dadurch gekennzeichnet, dass in Schritt (f) erhaltenes Abgas einem weiteren Absorptionsschritt mit gekühltem Absorptionsmittel unterzogen wird, wobei ein zumindest teilweise von Kohlendioxid befreites Abgas erhalten wird, sowie ein weiteres mit Kohlendioxid und teilweise mitabsorbiertem Kohlenmonoxid und Wasserstoff beladenes Absorptionsmittel erhalten wird, und das teilweise von Kohlendioxid befreite Abgas auf Absorptionsdruck verdichtet und zu Schritt (d) zurückgeführt wird.

Durch einen zusätzlichen Absorptionsschritt für das Abgas wird die Effizienz des Verfahrens weiter verbessert, das heißt in Bezug auf ein definiertes Zeitintervall können größere Volumenströme Synthesegas behandelt werden, wobei die Ausbeute an Wasserstoff als Produktgas und die Ausbeute an Kohlendioxid, welches gemäß Schritt (h) aus dem Verfahren ausgeschleust wird (Kohlendioxid-Produkt), grösser wird.

Dabei wird vorzugsweise das weitere mit Kohlendioxid und teilweise mitabsorbiertem Kohlenmonoxid und Wasserstoff beladene Absorptionsmittel in der Mehrzahl hintereinander geschalteter flash-Stufen gemäß Schritt (e) behandelt.

Die oben erläuterte Effizienz des Verfahrens bezüglich des Synthesegas-Durchsatzes wird dadurch weiter erhöht.

Eine Ausführungsform des erfindungsgemäßen Verfahrens ist dadurch gekennzeichnet, dass das Synthesegas in einem dem Verfahren vorgeschalteten Verfahrensschritt einer Wassergas-Shift-Reaktion zur Erhöhung der Wasserstoffausbeute unterzogen wird, wobei sich das Synthesegas mit Wasser und Kohlendioxid anreichert.

Eine Ausführungsform des erfindungsgemäßen Verfahrens ist somit dadurch gekennzeichnet, dass das Synthesegas Wasser (H₂O) als weitere Komponente beinhaltet.

Dieses Wasser wird vorzugsweise zumindest teilweise aus dem Synthesegas durch Kühlen des Synthesegases unter den Taupunkt von Wasser und Abscheiden des kondensierten Wassers entfernt.

Vorzugsweise wird die Hauptmenge des im Synthesegas vorhanden Wassers, insbesondere im Falle eines geshifteten Synthesegases, durch Kondensation entfernt. Die Entfernung dieses Wassers durch Kühlen unter den Taupunkt und Kondensation erfolgt vorzugsweise vor Schritt (d), das heißt bevor die Trennung des Kohlendioxids von den übrigen Gasbestandteilen des Synthesegases beginnt. Da im Verlaufe des weiteren Verfahrens kein Wasser als Prozessmedium benötigt wird, sind anschließend nur kleinere Mengen an Wasser aus dem Prozess zu entfernen.

Eine Ausführungsform des erfindungsgemäßen Verfahrens ist dadurch gekennzeichnet, dass das physikalisch wirkende Absorptionsmittel hygroskopisch ist.

Wird ein hygroskopisches Absorptionsmittel als physikalisch wirkendes Absorptionsmittel verwendet, wird nicht durch die vorgenannte Kondensation entferntes Wasser an das Absorptionsmittel gebunden, das heißt wird in diesem gelöst. Dadurch kann sich das Absorptionsmittel über einen längeren Zeitraum mit Wasser anreichern, wodurch die Absorptionskapazität des Absorptionsmittels sinkt. Vorzugsweise wird dieses akkumulierte Wasser daher durch einen Destillationsschritt, beispielsweise eine Destillation oder Rektifikation, vom Absorptionsmittel abgetrennt.

Vorzugsweise ist der Destillationsschritt Schritt (e) nachgeschaltet, das heißt das Wasser wird aus dem Absorptionsmittel entfernt, nachdem der Großteil der absorbierten Gasbestanteile aus dem Absorptionsmittel durch die gemäß Schritt (e) hintereinandergeschalteten flash-Stufen entfernt wurde.

Eine Ausführungsform des erfindungsgemäßen Verfahrens ist daher dadurch gekennzeichnet, dass in einem Schritt (e) nachgeschalteten Destillationsschritt Wasser aus dem Absorptionsmittel entfernt wird.

In einer Ausführungsform wird auch das durch Kondensation abgetrennte Wasser dem Destillationsschritt zugeführt und zusammen mit im Absorptionsmittel angereicherten Wasser entfernt. Dadurch wird für die gesamte thermische Trennung von Wasser und Absorptionsmittel im Destillationsschritt nur eine einzige Vorrichtung, beispielsweise eine Rektifikationskolonne, für das Verfahren benötigt.

Eine Ausführungsform des erfindungsgemäßen Verfahrens ist dadurch gekennzeichnet, dass der Destillationsschritt zur Entfernung von Wasser temporär betrieben wird, insbesondere temporär infolge eines Überschreitens einer Grenzkonzentration von Wasser im Absorptionsmittel betrieben wird.

Durch diese Maßnahme kann weiter Energie eingespart werden. Da sich Wasser über die Zeit nur langsam im Absorptionsmittel anreichert und die Absorptionskapazität dadurch nur langsam sinkt, kann es ausreichend sein den Destillationsschritt zur Entfernung von Wasser nur temporär zu betreiben. Unter "temporär" ist dabei zu verstehe, dass der Destillationsschritt zu bestimmten Zeiten während der Ausführung des Verfahrens ausgeführt wird und zu bestimmten Zeiten nicht. Letzteres ist beispielsweise durch eine entsprechende bypass-Anordnung von Leitungen und weiteren Bauteilen möglich.

Eine Ausführungsform des erfindungsgemäßen Verfahrens ist dadurch gekennzeichnet, dass im Destillationsschritt erhaltene Absorptionsmitteldämpfe als Stripp-Medium zum Entfernen von Kohlendioxid in der nachgeschalteten flash-Stufe gemäß Schritt (e) genutzt werden.

In dem Schritt (e) nachgeschalteten Destillationsschritt zur Abtrennung von Wasser vom Absorptionsmittel fallen Absorptionsmitteldämpfe an. In einer Ausführungsform fallen diese Absorptionsmitteldämpfe als Kopfprodukt an, beispielsweise wenn das Absorptionsmittel einen niedrigeren Siedepunkt aufweist als Wasser. Anstatt diese Absorptionsmitteldämpfe zu kondensieren und als flüssiges Absorptionsmittel zu Schritt (d) zurückzuführen, werden diese gemäß dieser Ausführungsform als Stripp-Medium zum Entfernen des Kohlendioxids in der nachgeschalteten flash-Stufe gemäß Schritt (e) genutzt. Dadurch kann die Menge an abgeschiedenem Kohlendioxid weiter gesteigert werden, ohne dass es eines zusätzlichen Energieaufwandes bedarf. Entgegen der Erwartung wurde ferner gefunden, dass die heißen Absorptionsmitteldämpfe die Effizienz des gesamten Verfahrens, welches grundsätzlich auf die Absorption von Kohlendioxids in einem kalten oder tiefkalten Absorptionsmittel ausgelegt ist, nicht verringern. Insbesondere wird die Gesamtleistung der Anlage in Bezug auf die Kältebilanz (Kälteleistung und Kühlwasser) nicht negativ beeinflusst. Ferner besteht der Vorteil, dass die im Destillationsschritt erhaltenen Absorptionsmitteldämpfe chemisch dem Absorptionsmittel entsprechen. Dadurch wird in das Absorptionsmittel kein "fremdes" Stripp-Medium eingebracht, welches anschließend aus dem ausgestrippten Gas zu entfernen ist.

Unter einem Stripp-Medium wird im Sinne der vorliegenden Erfindung ein Medium verstanden, welches während eines flash-Schritts in das beladene Absorptionsmittel eingetragen wird, beispielsweise eingeleitet wird, und an das Absorptionsmittel gebundene Gasbestandteile, vorzugsweise Kohlendioxid, vom Absorptionsmittel verdrängt.

Die Absorptionsmitteldämpfe werden als Stripp-Medium in dem Sinne genutzt, dass die Absorptionsmitteldämpfe in das beladene Absorptionsmittel eingebracht, insbesondere eingeleitet werden. Dabei wird das beladene Absorptionsmittel nicht bis zu dessen Siedepunkt oder Siedetemperatur erhitzt. In einer Ausführungsform wird das beladene Absorptionsmittel auf eine Temperatur erhitzt, die mindestens 10 K unterhalb der Siedetemperatur des Absorptionsmittels liegt, oder auf eine Temperatur die mindestens 15 K unterhalb der Siedetemperatur des Absorptionsmittels liegt, oder auf eine Temperatur die mindestens 20 K unterhalb der Siedetemperatur des Absorptionsmittels liegt.

Zusätzlich oder alternativ zur Nutzung der Absorptionsmitteldämpfe als Strippmedium kann das beladene Absorptionsmittel vor oder während dem Behandeln in der Mehrzahl hintereinander geschalteter flash-Stufen durch eine interne und/oder externe Energiequelle aufgewärmt werden. Die interne und/oder externe Energiequelle ist unabhängig von den Absorptionsmitteldämpfen als Energiequelle, das heißt die Absorptionsmitteldämpfe beinhalten keine Energie aus der internen und/oder externen Energiequelle. Insbesondere wird das beladene Absorptionsmittel durch Wärmetausch mit einem heißen internen oder externen Prozessmedium erwärmt. Dadurch kann die durch Schritt (e) aus dem beladenen Absorptionsmittel entfernte Menge an Kohlenmonoxid, Wasserstoff und Kohlendioxid weiter erhöht werden.

In einer Ausführungsform wird das beladene Absorptionsmittel ausschließlich vor oder während der nachgeschalteten flash-Stufe durch die interne und/oder externe Energiequelle aufgewärmt. Da Kohlenmonoxid und Wasserstoff an viele Absorptionsmittel, insbesondere Methanol, nur schwach binden, ist ein Erwärmen der zumindest ersten flash-Stufe durch eine interne und/oder externe Energiequelle nicht zwingend erforderlich.

Gemäß einer alternativen Ausführungsform zur Nutzung der Absorptionsmitteldämpfe als Strippmedium werden im Destillationsschritt erhaltene Absorptionsmitteldämpfe kondensiert und das kondensierte Absorptionsmittel anschließend im Absorptionsschritt gemäß Schritt (d) wiederverwendet.

Eine Ausführungsform des erfindungsgemäßen Verfahrens ist dadurch gekennzeichnet, dass in Schritt (g) erhaltene Kompressionswärme zum direkten oder indirekten Beheizen des Absorptionsmittels im Destillationsschritt genutzt wird.

Die zum Verdichten des in Schritt (f) erhaltenen Abgases und zum Verdichten des in Schritt (e) erhaltenen Kohlenmonoxid und Wasserstoff anfallende Kompressionswärme wird in vorteilhafter Weise zum direkten oder indirekten Beheizen des Absorptionsmittels im Destillationsschritt genutzt. Beispielsweise kann eine Rektifikationskolonne zumindest teilweise direkt mit der Abwärme eines Kompressors beheizt werde, oder die Abwärme wird zur Erzeugung von Dampf genutzt, welcher die Rektifikationskolonne beheizt. Dadurch wird die Wärmeintegration des Verfahrens verbessert.

Gemäß einer anderen Ausführungsform wird die in Schritt (g) erhaltene Kompressionswärme beim Behandeln des beladenen Absorptionsmittels in der Mehrzahl hintereinander geschalteter flash-Stufen gemäß Schritt (e) zum Erwärmen des beladenen Absorptionsmittels genutzt. Insbesondere wird das beladene Absorptionsmittel in der der zumindest ersten flash-Stufe nachgeschalteten flash-Stufe durch die vorgenannten Kompressionswärme erwärmt, um die Desorption des Kohlendioxids in der nachgeschalteten flash-Stufe zu erleichtern.

Eine Ausführungsform des erfindungsgemäßen Verfahrens ist dadurch gekennzeichnet, dass die nachgeschaltete flash-Stufe gegenüber der ersten flash-Stufe einen niedrigeren Druck aufweist.

In einer Ausführungsform weist die erste flash-Stufe zur Entfernung von mitabsorbiertem Kohlenmonoxid und Wasserstoff einen Druck von 10 bis 25 bar auf, vorzugsweise von 15 bis 20 bar auf, besonders bevorzugt von 18 bar auf. In einer Ausführungsform weist Schritt (e) eine zweite flash-Stufe zur Entfernung von mitabsorbiertem Kohlenmonoxid und Wasserstoff auf. In einer Ausführungsform weist die zweite flash-Stufe einen Druck von 5 bis 12 bar auf, vorzugsweise von 6 bis 10 bar auf, besonders bevorzugt von 8 bar auf. In einer Ausführungsform weist die nachgeschaltete flash-Stufe einen Druck von 1 bis 2 bar auf, vorzugsweise von 1,1 bis 1,5 bar, besonders bevorzugt von 1,3 bar. In einer Ausführungsform weist die nachgeschaltete flash-Stufe einen Druck unter Atmosphärendruck auf, beispielsweise einen Druck von 0,1 bis 1 bar. Durch Unterdruck in der nachgeschalteten flash-Stufe kann die Menge an abgeschiedenem Kohlendioxid weiter erhöht werden.

Eine Ausführungsform des erfindungsgemäßen Verfahrens ist dadurch gekennzeichnet, dass in der nachgeschalteten flash-Stufe gemäß Schritt (e) erhaltenes Absorptionsmittel zur erneuten Absorption von Kohlendioxid zum physikalischen Absorptionsschritt gemäß Schritt (d) zurückgeführt wird.

Gemäß einer Ausführungsform des erfindungsgemäßen Verfahrens beinhaltet das bereitgestellte physikalisch wirkende Absorptionsmittel Methanol, oder das physikalisch wirkende Absorptionsmittel besteht im Wesentlichen aus Methanol, oder das physikalisch wirkende Absorptionsmittel besteht aus Methanol. Das physikalisch wirkende Absorptionsmittel beinhaltet vorzugsweise wenigstens 90 Vol.-% Methanol, oder wenigstens 95 Vol.-% Methanol, oder wenigstens 99 Vol.-% Methanol, oder wenigstens 99,5 Vol.-% Methanol, oder wenigstens 99,9 Vol.-% Methanol. Methanol ist ein physikalisch wirkendes sowie hygroskopisches Absorptionsmittel.

Methanol bietet den Vorteil, dass es bezüglich Kohlendioxid einen sehr hohen Absorptionskoeffizienten aufweist, welcher mit steigendem Druck und sinkender Temperatur größer wird. Es ist in jedem Verhältnis mit Wasser mischbar und weist auch bei sehr niedrigen Temperaturen eine niedrige Viskosität auf. Es kann daher problemlos bei Temperaturen von weniger als -30 °C (minus dreißig Grad Celsius) als Absorptionsmittel verwendet werden.

Eine Ausführungsform des erfindungsgemäßen Verfahrens ist dadurch gekennzeichnet, dass das bereitgestellte physikalisch wirkende Absorptionsmittel N-Methyl-2-pyrrolidon (NMP) beinhaltet, oder im Wesentlichen aus NMP besteht, oder aus NMP besteht. Das physikalisch wirkende Absorptionsmittel beinhaltet vorzugsweise wenigstens 90 Vol.-% NMP, oder wenigstens 95 Vol.-% NMP, oder wenigstens 99 Vol.-% NMP, oder wenigstens 99,5 Vol.-% NMP. NMP ist ein physikalisch wirkendes sowie hygroskopisches Absorptionsmittel.

Eine Ausführungsform des erfindungsgemäßen Verfahrens ist dadurch gekennzeichnet, dass das Synthesegas keine Schwefelverbindungen als Verunreinigungen aufweist, insbesondere keinen Schwefelwasserstoff (H₂S) und/oder kein Carbonylsulfid (COS) als Verunreinigung aufweist.

Eine Ausführungsform des erfindungsgemäßen Verfahrens ist dadurch gekennzeichnet, dass das Synthesegas keinen Cyanwasserstoff (HCN) und/oder kein Ammoniak (NH₃) als Verunreinigung aufweist.

Das Synthesegas wird vorzugsweise durch Dampfreformierung (SMR), partielle Oxidation (POX), autotherme Reformierung (ATR), gasbeheizte Reformierung (GHR), oder Kombinationen davon, von gasförmigen kohlenstoffhaltigen Einsatzstoffen, vorzugsweise Erdgas, hergestellt. Vorzugsweise wurde der kohlenstoffhaltige Einsatzstoff einer Hydrodesulfurierung unterzogen. So erzeugte Synthesegase enthalten keine der vorgenannten Schwefelverbindungen und/oder sich von molekularem Stickstoff (N₂) unterscheidende Stickstoffverbindungen als Verunreinigungen. In einer Ausführungsform weist das Synthesegas darüber hinaus bei der Synthesegaserzeugung nicht reagiertes Methan oder andere höhere homologe Kohlenwasserstoffe auf, welche nicht zu Synthesegas umgesetzt wurden.

Eine Ausführungsform des erfindungsgemäßen Verfahrens ist dadurch gekennzeichnet, dass das Verfahren keinen Heißregenerationsschritt zur Regenerierung des beladenen Absorptionsmittels umfasst. Insbesondere die vorgenannten Schwefelverbindungen, insbesondere Schwefelwasserstoff (H₂S), werden üblicherweise durch einen energieintensiven Heißregenerationsschritt entfernt. Schwefelwasserstoff weist in Bezug auf viele Absorptionsmittel, insbesondere Methanol, einen hohen Absorptionskoeffizienten auf. Das erfindungsgemäße Verfahren erfordert einen solchen Heißregenerationsschritt nicht. Es ist dadurch besonders energiesparend und weist somit niedrige Betriebskosten (OPEX) auf. Da ein Heißregenerationsschritt eine dedizierte Kolonne erfordert, sind auch die Investitionskosten (CAPEX) für das erfindungsgemäße Verfahren niedrig.

Unter "Heißregeneration" wird im Sinne der vorliegenden Erfindung ein Verfahrensschritt verstanden, welcher die Desorption absorbierter Gase unter Eintrag von Wärme in das beladene Absorptionsmittel umfasst, wobei das Absorptionsmittel durch Eintrag von Wärme zum Sieden erhitzt wird. Der vorgenannte Eintrag von Absorptionsmitteldämpfen in beladenes Absorptionsmittel ist explizit nicht als Heißregeneration zu verstehen, da das Absorptionsmittel dadurch lediglich auf eine Temperatur unterhalb seiner Siedetemperatur erwärmt wird.

Eine Ausführungsform des erfindungsgemäßen Verfahrens ist dadurch gekennzeichnet, dass das Kohlendioxid nach dem Ausschleusen aus dem Verfahren gemäß Schritt (h) keinem Trocknungsschritt unterzogen wird.

Das erfindungsgemäße Verfahren erfordert keinen Trocknungsschritt für das gemäß Schritt (h) aus dem Verfahren ausgeschleuste Kohlendioxid. Die Hauptmengen an Wasser wird aus dem Synthesegas vorzugsweise durch Kühlen des Synthesegases unter den Taupunkt von Wasser und Kondensation des Wassers entfernt. Durch diesen Schritt nicht entferntes Wasser wird vorzugsweise durch ein hygroskopisches Absorptionsmittel aufgenommen und gegebenenfalls in einem weiteren Schritt durch Destillation aus dem Absorptionsmittel entfernt. Zusätzliches Prozesswasser oder zusätzlicher Prozessdampf ist, im Gegensatz zu einem Verfahren mit chemischer Absorption, bei welcher Wasser oder ein Amin/Wasser-Gemisch als Stripp-Medium verwendet wird, nicht vorgesehen.

Eine Ausführungsform des erfindungsgemäßen Verfahrens ist dadurch gekennzeichnet, dass das Kohlendioxid keinem Kondensationsschritt unterzogen wird, insbesondere nach dem Ausschleusen aus dem Verfahren gemäß Schritt (h) keinem Kondensationsschritt unterzogen wird.

Das erfindungsgemäße Verfahren erfordert keinen energieintensiven und apparatetechnisch aufwändigen Kondensationsschritt für Kohlendioxid, um dieses von den anderen Gasbestanteilen abzutrennen. Durch die Kombination der erfindungsgemäßen Verfahrensschritte wird ein reines und wasserfreies (trockenes) Kohlendioxid-Produkt erhalten, ohne dass bezüglich des Kohlendioxids ein Kondensationsschritt erforderlich wäre.

Eine Ausführungsform des erfindungsgemäßen Verfahrens ist dadurch gekennzeichnet, dass das Kohlendioxid nach Ausschleusen aus dem Verfahren gemäß Schritt (h) verdichtet wird, und anschließend gelagert wird oder einer weiteren Verwendung zugeführt wird. Bevor das Kohlendioxid einer Langzeitlagerung zugeführt wird, wird es üblicherweise verdichtet. Dies ist regelmäßig auch dann erforderlich, wenn das Kohlendioxid einer weiteren Verwendung zugeführt werden soll, beispielsweise für eine Zwischenlagerung in Drucktanks.

Eine Ausführungsform des erfindungsgemäßen Verfahrens ist dadurch gekennzeichnet, dass ein Inertgas, insbesondere Stickstoff (N₂), als Stripp-Medium zum Entfernen von Kohlendioxid in der nachgeschalteten flash-Stufe gemäß Schritt (e) genutzt wird.

Dadurch kann die Ausbeute an abgeschiedenem Kohlendioxids weiter erhöht werden.

Die Erfindung betrifft ferner eine Anlage zur Herstellung von Wasserstoff aus Synthesegas. Die Anlage umfasst ferner Mittel zur Abtrennung von Kohlendioxid aus diesem Synthesegas.

Die Aufgaben der Erfindung werden ferner zumindest teilweise gelöst durch eine Anlage zur Herstellung von Wasserstoff (H₂) und zur Abtrennung von Kohlendioxid aus Synthesegas, umfassend die folgenden Anlagenkomponenten:
(a) Mittel zum Bereitstellen von Synthesegas, wobei das Synthesegas zumindest Wasserstoff (H₂), Kohlenmonoxid (CO) sowie Kohlendioxid (CO₂) beinhaltet;
(b) Mittel zum Bereitstellen eines physikalisch wirkenden Absorptionsmittels;
(c) Mittel zum Kühlen des Synthesegases und des Absorptionsmittels;
(d) Eine Absorptionskolonne zum Führen des gekühlten Synthesegases und des gekühlten Absorptionsmittels bei erhöhtem Druck im Gegenstrom, zur Entfernung von Kohlendioxid aus dem Synthesegas, wobei zumindest teilweise von Kohlendioxid befreites Synthesegas erhältlich ist, sowie mit Kohlendioxid und teilweise mitabsorbiertem Kohlenmonoxid und Wasserstoff beladenes Absorptionsmittel erhältlich ist;
(e) Eine Mehrzahl hintereinander geschalteter flash-Stufen, beinhaltend eine erste flash-Stufe zur Entfernung des mitabsorbierten Kohlenmonoxid und Wasserstoff aus dem beladenen Absorptionsmittel, sowie beinhaltend eine der ersten flash-Stufe nachgeschaltete flash-Stufe zur Entfernung von Kohlendioxid aus dem beladenen Absorptionsmittel;
(f) Eine Vorrichtung zum Abtrennen von Wasserstoff aus dem zumindest teilweise von Kohlendioxid befreiten Synthesegas in einem physikalischen Trennschritt, wobei Wasserstoff als Produktgas sowie ein Wasserstoff, Kohlenmonoxid und Kohlendioxid aufweisendes Abgas erhältlich sind;
(g) Ein Kompressor zum Verdichten des in der ersten flash-Stufe erhältlichen Kohlenmonoxid und Wasserstoff und des in der Vorrichtung (f) erhältlichen Abgases, sowie zum Rückführen des in der ersten flash-Stufe erhältlichen Kohlenmonoxid und Wasserstoff und des in der Vorrichtung (f) erhältlichen Abgases zur Absorptionskolonne (d).
(h) Mittel zum Ausschleusen des in der Vorrichtung (f) erhältlichen Produktgases (Wasserstoff) und des in der nachgeschalteten flash-Stufe erhältlichen Kohlendioxids aus der Anlage.

Gemäß einer Ausführungsform ist der Kompressor (g) zum Verdichten des in der ersten flash-Stufe erhältlichen Kohlenmonoxid und Wasserstoff sowie weiterhin zum Verdichten des in einer oder mehreren weiteren flash-Stufen erhältlichen Kohlenmonoxid und Wasserstoff und des in der Vorrichtung (f) erhältlichen Abgases konfiguriert; sowie zum Rückführen des in der ersten flash-Stufe erhältlichen Kohlenmonoxid und Wasserstoff sowie weiterhin zum Rückführen des in einer oder mehreren weiteren flash-Stufen erhältlichen Kohlenmonoxid und Wasserstoff, und des in der Vorrichtung (f) erhältlichen Abgases zur Absorptionskolonne (d), konfiguriert.

Eine Ausführungsform der erfindungsgemäßen Anlage ist dadurch gekennzeichnet, dass die Vorrichtung (f) eine Einheit zur Druckwechsel-Adsorption beinhaltet.

Eine Ausführungsform der erfindungsgemäßen Anlage ist dadurch gekennzeichnet, dass die Anlage eine weitere Absorptionskolonne zum Führen des in der Vorrichtung (f) erhältlichen Abgases und von gekühltem Absorptionsmittel im Gegenstrom beinhaltet, wobei zumindest teilweise von Kohlendioxid befreites Abgas erhältlich ist, sowie ein weiteres mit Kohlendioxid und teilweise mitabsorbiertem Kohlenmonoxid und Wasserstoff beladenes Absorptionsmittel erhältlich ist.

Die Aufgaben der Erfindung werden ferner zumindest teilweise gelöst durch eine Verwendung des erfindungsgemäßen Verfahrens oder der erfindungsgemäßen Anlage zur Abscheidung von Kohlendioxid aus schwefelfreiem Synthesegas.

### Ausführungsbeispiel

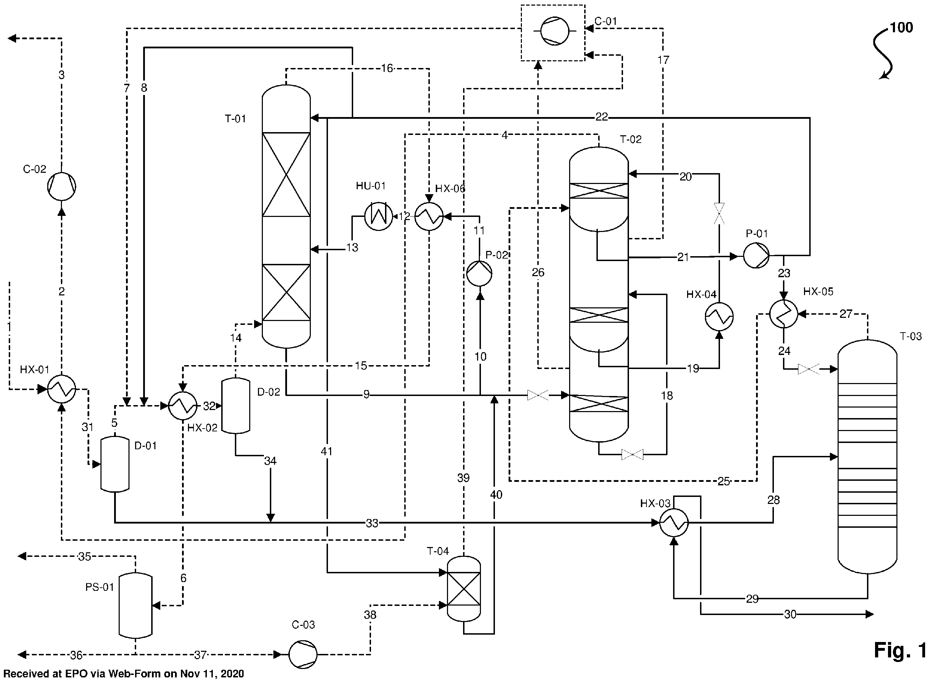

Figur 1 zeigt ein vereinfachtes Verfahrensfließbild einer möglichen Ausgestaltung eines erfindungsgemäßen Verfahrens 100 oder einer erfindungsgemäßen Anlage 100. Absorptionsmittel ist gemäß dieser Ausgestaltung Methanol. Im Verfahrensfließbild sind Gas-Ströme durch gestrichelte Linien dargestellt und Flüssigkeits-Ströme durch durchgezogene Linien dargestellt. Die Flussrichtung des jeweiligen Stroms ist durch Pfeile angedeutet.

Synthesegas aus einer Reformereinheit (ATR, SMR, POx, GHR oder Kombinationen davon), welches ferner in einer der Reformereinheit nachgeschalteten Wassergas-Shift-Einheit (beides nicht gezeigt) behandelt wurde, wird über Leitung 1 herangeführt und zunächst in Wärmeaustauscher HX-01 mit Hilfe eines Kohlendioxid-Stroms aus Leitung 4 unter den Taupunkt von Wasser abgekühlt. Das gekühlte Synthesegas wird über Leitung 31 weitergeführt und kondensiertes Wasser wird aus dem Synthesegas in Abscheider D-01 abgeschieden. Synthesegas und nicht kondensiertes Wasser wird über Leitung 5 weitergeführt und in Wärmeaustauscher HX-02 weiter auf eine Temperatur von -10 °C gegen gereinigtes Synthesegas aus Leitung 16 abgekühlt. Um die Bildung von Eis in Leitung 5 zu verhindern, wird über Leitung 8 Methanol zugeführt. In Wärmeaustauscher HX-02 auf -10 °C abgekühltes Synthesegas wird über Leitung 32 weitergeführt und in Abscheider D-02 eine weitere Menge Wasser aus dem Synthesegas abgeschieden, welche über Leitung 34 der Leitung 33 zugeführt wird.

Das weitgehend von Wasser befreite und abgekühlte Synthesegas wird über Leitung 14 weitergeführt und Absorptionskolonne T-01 zugeführt, in welcher es einem physikalischen Absorptionsschritt unterzogen wird. Absorptionskolonne T-01 wird bei einem Absorptionsdruck von 32 bar betrieben. In Absorptionskolonne T-01 wird kaltes Methanol als Absorptionsmittel aus den Leitungen 13 und 22 von oben nach unten geführt, während das Synthesegas aus Leitung 14 im Gegenstrom von unten nach oben geführt wird, wobei hauptsächlich Kohlendioxid in Methanol absorbiert wird sowie kleinere Mengen Wertgase (Kohlenmonoxid und Wasserstoff) in Methanol mitabsorbiert (co-absorbiert) werden. Gleichzeitig werden gegebenenfalls nicht in den Abscheidern D-01 und D-02 kondensierte Restmengen an Wasser in der Absorptionskolonne T-01 im Methanol gelöst. Gereinigtes, das heißt weitgehend von Wasser und Kohlendioxid befreites Synthesegas wird aus der Absorptionskolonne T-01 über Leitung 16 abgezogen. Das Synthesegas kühlt anschließend eine Teilmenge von aus Leitung 9 mit Hilfe von Pumpe P-02 aus Leitung 10 abgezweigtem und über Leitung 11 weitergeführtem beladenem Methanol in Wärmeaustauscher HX-06. Das gereinigte Synthesegas wird anschließend über Leitung 15 weitergeführt und kühlt in Wärmeaustauscher HX-02 das rohe Synthesegas aus Leitung 5. Das gereinigte Synthesegas wird anschließend über Leitung 6 einer Druckwechseladsorptionseinheit PS-01 zur Herstellung von reinem Wasserstoff zugeführt.

Im Sumpfbereich der Absorptionskolonne T-01 wird beladenes Methanol über Leitung 9 abgezogen. Das beladene Methanol enthält Kohlendioxid, sowie in kleineren Mengen mitabsorbierte Wertgase (Kohlenmonoxid und Wasserstoff) als absorbierte Gaskomponenten. Ein Teil des beladenen Methanols wird aus Leitung 9 über Leitung 10 mit Hilfe von Pumpe P-02 abgezweigt, über Leitung 11 weitergeführt und in Wärmeaustauscher HX-06 gegen gereinigtes Synthesegas aus Leitung 16 gekühlt. Es wird anschließend über Leitung 12 weitergeführt und in Kältemittel-Kühler HU-01 auf -35 °C gekühlt. Das gekühlte beladene Methanol wird anschließend über Leitung 13 weitergeführt und zur erneuten Absorption von Kohlendioxid in Absorptionskolonne T-01 eingespeist.

Der Hauptanteil des beladenen Methanols wird über Leitung 9 in die Flash-Kolonne T-02 eingespeist. Dabei wird der Druck über das in Leitung 9 angeordnete Druckminderungsventil zunächst auf 18 bar gesenkt. Im unteren Teil der Flash-Kolonne werden aufgrund dieser Drucksenkung in einem ersten flash-Schritt zunächst im Wesentlichen mitabsorbierte Wertgase (Kohlenmonoxid und Wasserstoff) freigesetzt, die über Leitung 26 abgezogen und Kompressor C-01 zugeführt werden. Auf 18 bar entspanntes beladenes Methanol wird weiter über Leitung 18 geführt und über das in Leitung 18 angeordnete Druckminderungsventil auf 8 bar entspannt. Im mittleren Teil der flash-Kolonne werden aufgrund dieser weiteren Drucksenkung in einem zweiten flash-Schritt weiterhin im Wesentlichen mitabsorbierte Wertgase (Kohlenmonoxid und Wasserstoff) freigesetzt, die über Leitung 17 abgezogen und Kompressor C-01 zugeführt werden. Kompressor C-01 verdichtet die Wertgase aus den Leitungen 17 und 26 auf Absorptionsdruck (32 bar). Die verdichteten Wertgase werden anschließend über die Leitungen 7, 5, 32 und 14 in die Absorptionskolonne T-01 zurückgeführt.

Das aus der zweiten flash-Stufe über Leitung 19 abgezogene Methanol wird in Wärmeaustauscher HX-04 mit Hilfe eines Teils des rohen Synthesegases aus Leitung 1 (nicht gezeigt) angewärmt und über Leitung 20 in eine dritte flash-Stufe dem oberen Teil der flash-Kolonne zugeführt. Die dritte flash-Stufe ist eine der ersten und zweiten flash-Stufe nachgeschaltete flash-Stufe. In Leitung 20 ist ein weiteres Druckminderungsventil angeordnet, welches das beladenen Methanol, welches hauptsächlich noch Kohlendioxid als absorbierte Gaskomponenten enthält, auf 1,3 bar entspannt.

Der dritten flash-Stufe werden über Leitung 25 Methanol-Dämpfe aus Rektifikationskolonne T-03 zugeführt, welche in der dritten flash-Stufe als Stripp-Medium verwendet werden und die Menge des in der dritten flash-Stufe aus dem Absorptionsmittel ausgetriebenen (desorbierten) Kohlenmonoxids im Vergleich mit einer reinen flash-Anordnung erhöhen. Die dritte flash-Stufe kann somit auch als Stripp-Stufe gesehen werden, wobei Methanol-Dämpfe als Stripp-Medium verwendet werden. Gleichzeitig wirkt sich die Anwärmung über Wärmeaustauscher HX-04 des über Leitung 20 zugeführten beladenen Methanols positiv auf die Ausbeute des abgeschiedenen Kohlendioxids aus. Das aus der dritten flash-Stufe erhaltene Kohlendioxid wird über Leitung 4 aus dieser flash-Stufe abgezogen. Es weist eine niedrige Temperatur von -36 °C auf und wird daher zum Kühlen dies rohen Synthesegases aus Leitung 1 in Wärmeaustauscher HX-01 genutzt. Das Kohlendioxid-Produkt wird über Leitung 2 weitergeführt und durch Kompressor C-02 verdichtet. Das verdichtete Kohlendioxid kann anschließend gelagert (CCS) oder einer weiteren Verwendung zugeführt werden (CCU).

Das in der dritten flash-Stufe erhaltene Methanol weist nur noch einen geringfügigen Restgehalt an absorbiertem Kohlendioxid auf. Es wird über Leitung 21 aus der dritten flash-Stufe abgezogen und mit Hilfe von Pumpe P-01 auf Absorptionsdruck (32 bar) verdichtet. Es wird anschließend über Leitung 22 weitergeführt und zur erneuten Absorption von Kohlendioxid der Absorptionskolonne T-01 in deren Kopfbereich zugeführt.

Da das Absorptionsmittel Methanol permanent im Kreislauf gepumpt wird und eine große Zahl an Absorptions- und Desorptions-Zyklen durchläuft, reichert es sich über die Zeit mit in der Absorptionskolonne T-01 aus dem rohen Synthesegas aufgenommenem Wasser an. Aus diesem Grund wird ein Teil des weitgehend von absorbierten Bestandteilen befreiten Methanols aus Leitung 22 abgezweigt und über Leitung 23 zunächst in Wärmeaustauscher HX-05 gegen heiße Methanol-Dämpfe aus Leitung 27 erwärmt. Die Menge des über Leitung 23 abgezogenen Methanols wird so eingestellt, dass sich Wasser in Methanol im Kreislauf zwischen Absorptionskolonne T-01 und flash-Kolonne nicht anreichern kann, das heißt eine vordefinierte Grenzkonzentration nicht überschritten wird. Es wird anschließend über Leitung 24 einem oberen Bereich der Rektifikationskolonne T-03 zugeführt. In Leitung 24 ist ein Druckminderungsventil angeordnet, durch welches das Methanol auf 2 bar entspannt wird. Der Rektifikationskolonne T-03 wird auch Wasser in einem mittleren Bereich zugeführt. Dabei handelt es sich um das in den Abscheidern D-01 und D-02 aus dem rohen Synthesegas abgeschiedene Wasser. Dieses wird über Leitung 33 herangeführt und in Wärmeaustauscher HX-03 gegen heißes Wasser, welches die Rektifikationskolonne T-03 als Sumpfprodukt über Leitung 29 verlässt, angewärmt. Rektifikationskolonne T-03 wird weiterhin über einen Aufkocher mit Frischdampf beheizt (nicht gezeigt). In Rektifikationskolonne T-03 findet im Wesentlichen eine Trennung von Methanol und Wasser statt, wobei Methanol-Dämpfe die Rektifikationskolonne T-03 über Leitung 27 als Kopfprodukt verlassen, in Wärmeaustauscher HX-05 gegen Methanol aus Leitung 23 leicht abgekühlt werden und über Leitung 25, wie oben erwähnt, in die dritte flash-Stufe als Stripp-Medium eingespeist werden.

In einer alternativen Ausführungsform (nicht gezeigt) werden die aus Leitung 27 abgezogenen Methanol-Dämpfe vollständig kondensiert und das so erhaltene kondensierte Methanol Leitung 22 zur weiteren Einspeisung in die Absorptionskolonne T-01 zugeführt.

Wasser wird aus Rektifikationskolonne T-03 als Sumpfprodukt über Leitung 29 abgezogen, gegen Wasser aus Leitung 33 gekühlt und aus dem Verfahren abgezogen.

Das aus der Absorptionskolonne T-01 über Leitung 16 ausgeschleuste und nach Passieren der Wärmeaustauscher HX-06 und HX-02 über die Leitungen 15 und 6 weitergeführte Synthesegas wird einer Druckwechseladsorptionseinheit PS-01 zur Herstellung von reinem Wasserstoff zugeführt. In der Druckwechseladsorptionseinheit PS-01 wird Wasserstoff von weiteren Synthesegasbestandteilen abgetrennt. Streng genommen werden die weiteren Gasbestandteile, beispielsweise Kohlenmonoxid und Kohlendioxid, vom Wasserstoff abgetrennt, da Wasserstoff als "leichte Komponente" nicht am Adsorbens des Festbetts der Druckwechseladsorptionseinheit PS-01 adsorbiert. Vielmehr werden die weiteren Gasbestanteile durch fortlaufende Adsorptions- und Desorptionsvorgänge am Festbett als "schwere Komponenten" vom Wasserstoff abgetrennt.

In der Druckwechseladsorptionseinheit PS-01 werden hauptsächlich Kohlendioxid, Kohlenmonoxid, Stickstoff, Methan sowie gegebenenfalls weitere Spurenkomponenten von Wasserstoff durch Adsorption-Desorption-Zyklen abgetrennt beziehungsweise Wasserstoff von diesen abgetrennt. Am Ende eines jeden Zyklus werden die adsorbierten Komponenten durch Druckabsenkung vom Adsorbens des Festbetts der Druckwechseladsorptionseinheit PS-01 entfernt, wobei das Abgas aus dem entsprechenden Behälter der Druckwechseladsorptionseinheit PS-01 ausgeschleust wird. Das Abgas enthält neben den vorgenannten von Wasserstoff abzutrennenden Bestanteilen auch signifikante Mengen nicht abgetrennten beziehungsweise am Festbett mitadsorbierten Wasserstoff. Das Abgas wird anschließend auf zwei Teilströme aufgeteilt. Ein erster Teil wird über Leitung 36 aus dem Verfahren ausgeschleust und kann beispielsweise als Brennstoff für die Herstellung des Synthesegases genutzt werden. Der zweite Teilstrom wird über Leitung 37 einem Kompressor C-03 zugeführt und von 1,2 bar auf circa 7,2 bar verdichtet.

Anschließend kann das verdichtete Abgas dem im mittleren Teil der flash-Kolonne T-02 erhaltenen Wertgas (Wasserstoff, Kohlenmonoxid) in Leitung 17 zugeführt werden und wird mit diesem zusammen in Kompressor C-01 auf Absorptionsdruck (32 bar) verdichtet (nicht gezeigt). In Kompressor C-01 wird auch in der ersten flash-Stufe erhaltenes Wertgas (Wasserstoff, Kohlenmonoxid) auf Absorptionsdruck (32 bar) verdichtet. Gemäß dieser Ausführungsform wird das Abgas aus der Druckwechseladsorptionseinheit PS-01 somit zusammen mit den in der ersten und zweiten flash-Stufe erhaltenen desorbierten Wertgasen auf Absorptionsdruck verdichtet und der Absorptionskolonne T-01 zur erneuten Absorption zugeführt.

Gemäß einer weiteren Ausführungsform wird das Abgas aus Leitung 38 einer weiteren Absorptionskolonne T-04 zugeführt. In Absorptionskolonne T-04 wird Kohlendioxid aus dem Abgas durch Absorption in Methanol im Gegenstromverfahren entfernt. Methanol wird aus dem regenerierten Methanol-Strom aus Leitung 22 abgezweigt und durch Leitung 41 in die Absorptionskolonne T-04 eingespeist. Mit Kohlendioxid beladenes Absorptionsmittel wird über Leitung 40 aus der Absorptionskolonne T-04 ausgeschleust und dem beladenen Absorptionsmittel in Leitung 9 zugeführt. Es durchläuft damit anschließend die gleichen Prozessschritte wie das aus der Absorptionskolonne T-01 abgezogene beladene Absorptionsmittel. Das von Kohlendioxid weitgehend befreite Abgas in Leitung 39 wird Kompressor C-01 zur gemeinsamen Kompression mit den Gasen aus den Leitungen 17 und 26 auf Absorptionsdruck (32 bar) zugeführt. Durch die Verwendung eines zusätzlichen Absorptionsschritts durch Absorptionskolonne T-04 wird die im Prozess abgeschiedene Gesamtmenge an Kohlendioxid weiter erhöht.

Die folgende Tabelle zeigt die Vorteile des erfindungsgemäßen Verfahren mit teilweiser Rückführung des aus der Druckwechseladsorptionseinheit PS-01 ausgeschleusten Abgases, wobei das Abgas in Leitung 37 nach Kompression in Kompressor C-03 direkt dem flash-Gas in Leitung 17 zugeführt wird.

Gemäß Beispiel 1 wird kein Abgas aus PS-01 zurückgeführt, das heißt das Abgas wird vollständig einer Nutzung als Brennstoff zur Herstellung von Synthesegas zugeführt. Gemäß Beispiel 2 werden 50 Gew.-% des Abgases über Leitung 37 abgezweigt und zurückgeführt; gemäß Beispiel 3 werden 90 Gew.-% des Abgases über Leitung 37 abgezweigt und zurückgeführt.

Die Daten der Tabelle gelten für die Herstellung von 100 kNm³/h (Kilonormkubikmeter pro Stunde) Wasserstoff, welcher anschließend auf einen Druck von 30 bar verdichtet wird. Die Daten wurden durch Simulation mit der Software Aspen Plus (V9) generiert.

| | **Beispiel 1** | **Beispiel 2** | **Beispiel 3** |
|---|---|---|---|
| | **keine Abgas-Rückführung** | **50 Gew.-% AbgasRückführung** | **90 Gew.-% AbgasRückführung** |
| Anteil abgeschiedenes Kohlendioxid (CO₂ capture) | 83,75 % | 91,13 % | 98,07 % |
| Reinheit Kohlendioxid | 98,80 % | 98,80 % | 98,40 % |
| Wasserstoff-Ausbeute (H2 recovery) | 87,73 % | 93,45 % | 98,52 % |
| Wasserstoff-Produktion / (Nm³/hr) | 100,168 | 100,168 | 100,168 |
| Kühlleistung / kW | 2,586 | 2,643 | 2,715 |
| Dampfverbrauch / (t/h) | 0,77 | 0,73 | 0,69 |
| elektrische Leistung Verfahren / kW (ohne CO₂-Kompression) | 1,783 | 3,662 | 6,422 |
| elektrische Leistung Kühleinheit / kW | 1,378 | 1,409 | 1,447 |
| elektrische Leistung gesamt / kW | 3,161 | 5,071 | 7,869 |
| Kühlwasser / (t/h) | 10 | 154 | 369 |

Der Anteil an abgeschiedenem Kohlendioxid ist der Anteil in % an der theoretisch abscheidbaren Kohlendioxidmenge. Die Daten zeigen einen signifikant verbesserten Anteil an abgeschiedenem Kohlendioxid, wenn ein Teil des Abgases der Druckwechseladsorptionseinheit als Recycle-Gas komprimiert und zum Absorptionsschritt zurückgeführt wird. Der Anteil an abgeschiedenem Kohlendioxid steigt dabei mit dem Anteil der zurückgeführten Abgas-Menge. Bei einer Recycle-Rate von 90 Gew.-% werden über 98 % des theoretisch abscheidbaren Kohlendioxids abgeschieden, im Vergleich zu unter 85 % ohne Rückführung des Abgases. Das Kohlendioxid weist dabei eine Reinheit von mindestens 98 % auf.

Die folgende Tabelle zeigt eine Materialbilanz des obigen Beispiels 3 (90 Gew.-% Rückführung des Abgases aus PS-01).

| | | Synthesegas (Leitung 1) | Synthesegas (Leitung 6) | Wasserstoff (Leitung 35) | Kohlendioxid (Leitung 3) | Abgas (Leitung 36, 37) | Zurückgeführtes Abgas (Leitung 37) |
|---|---|---|---|---|---|---|---|
| Temperatur | °C | 40 | 20 | 20 | 40 | 20 | 20 |
| Druck | bar | 32 | 30 | 30 | 20 | 1 | 1 |
| Stoffmengenstrom (*mole flow*) | kmol/hr | 7366 | 6544 | 5013 | 1707 | 1531 | 1378 |
| Molanteile | mol/mol | | | | | | |
| Kohlendioxid (CO₂) | | 0,233 | 0,054 | 0,000 | 0,984 | 0,230 | 0,230 |
| Wasserstoff (H2) | | 0,691 | 0,870 | 1,000 | 0,004 | 0,447 | 0,447 |
| Stickstoff (N2) | | 0,003 | 0,025 | 0,000 | 0,001 | 0,108 | 0,108 |
| Kohlenmonoxid (CO) | | 0,005 | 0,041 | 0,000 | 0,004 | 0,175 | 0,175 |
| Methan (CH₄) | | 0,002 | 0,009 | 0,000 | 0,005 | 0,040 | 0,040 |
| Methanol (CH₃OH) | | 0,000 | 0,000 | 0,000 | 0,002 | 0,001 | 0,001 |
| Wasser (H₂O) | | 0,068 | 0,000 | 0,000 | 0,000 | 0,000 | 0,000 |

Die Materialbilanz zeigt, dass durch das erfindungsgemäße Verfahren neben den oben erwähnten Vorteilen (hohe Rate an abgeschiedenem Kohlendioxid) auch ein Kohlendioxidprodukt erhalten wird, welches trocken ist, das heißt kein Wasser als Verunreinigung enthält, und eine hohe Reinheit von 98,4 mol-% aufweist. Das Kohlendioxidprodukt ist dadurch für Langzeitlagerung (CCS) geeignet oder kann ohne weiteren Reinigungsschritt einer weiteren Verwendung zugeführt werden. Beispielsweise würde sich das so erhaltene Kohlendioxidprodukt als Synthesegasbestandteil neben Elektrolyse-Wasserstoff zur Herstellung von Methanol eignen.

Ferner wird ein Wasserstoff-Produkt ohne Verunreinigungen erhalten.

Die Materialbilanz zeigt weiterhin, dass das aus der Druckwechselabsorptionsvorrichtung (PSA) ausgeschleuste Abgas (PSA-Abgas) einen überraschend hohen Wasserstoffanteil sowie Kohlendioxidanteil aufweist, weshalb es sich lohnt, den im PSA-Abgas enthaltenen Wasserstoff zurückzugewinnen und das im PSA-Abgas enthaltene Kohlendioxid der Kohlendioxidabscheidung zugänglich zu machen.

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination von Merkmalen in Bezug auf verschiedene Arten von Gegenständen oder Anspruchstypen in Betracht gezogen werden kann. Merkmale können kombiniert werden um synergetische Effekte zu erzielen, welche über die einfache Summierung der technischen Merkmale hinausgehen.

Während die Erfindung im Detail in der Zeichnung und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnung, der Offenbarung und der abhängigen Ansprüche verstanden und ausgeführt werden.

### Bezugszeichenliste

- 1 bis 41: Leitung
- HX-01 bis HX-06: Wärmeaustauscher
- HU-01: Kältemittel-Kühler
- D-01, D-02: Abscheider
- T-01, T-04: Absorptionskolonne
- T-02: Flash-Kolonne
- T-03: Rektifikationskolonne
- P-01, P-02: Pumpe
- C-01 bis C-03: Kompressor
- PS-01: Druckwechseladsorptionseinheit (PSA)

## Patentansprüche

1. Verfahren zur Herstellung von Wasserstoff (H₂) und zur Abtrennung von Kohlendioxid aus Synthesegas, umfassend die folgenden Verfahrensschritte:
(a) Bereitstellen von Synthesegas, wobei das Synthesegas zumindest Wasserstoff (H₂), Kohlenmonoxid (CO) sowie Kohlendioxid (CO₂) beinhaltet;
(b) Bereitstellen eines physikalisch wirkenden Absorptionsmittels;
(c) Kühlen des Synthesegases und des Absorptionsmittels;
(d) Entfernen von Kohlendioxid aus dem gekühlten Synthesegas durch das gekühlte Absorptionsmittel in einem physikalischen Absorptionsschritt bei erhöhtem Druck, wobei das gekühlte Synthesegas und das gekühlte Absorptionsmittel im Gegenstrom geführt werden, wobei zumindest teilweise von Kohlendioxid befreites Synthesegas erhalten wird, sowie mit Kohlendioxid und teilweise mitabsorbiertem Kohlenmonoxid und Wasserstoff beladenes Absorptionsmittel erhalten wird;
(e) Behandeln des beladenen Absorptionsmittels in einer Mehrzahl hintereinander geschalteter flash-Stufen, wobei in zumindest einer ersten flash-Stufe mitabsorbiertes Kohlenmonoxid und Wasserstoff aus dem beladenen Absorptionsmittel entfernt wird, und in einer der ersten flash-Stufe nachgeschalteten flash-Stufe Kohlendioxid aus dem beladenen Absorptionsmittel entfernt wird;
(f) Abtrennen von Wasserstoff aus dem zumindest teilweise von Kohlendioxid befreiten Synthesegas in einem physikalischen Trennschritt, wobei Wasserstoff als Produktgas sowie ein Wasserstoff, Kohlenmonoxid und Kohlendioxid aufweisendes Abgas erhalten werden;
(g) Verdichten auf Absorptionsdruck und zumindest teilweises Rückführen des in Schritt (f) erhaltenen Abgases und des in Schritt (e) erhaltenen Kohlenmonoxid und Wasserstoff zu Schritt (d);
(h) Ausschleusen des in Schritt (f) erhaltenen Produktgases (Wasserstoff) und des in Schritt (e) erhaltenen Kohlendioxid aus dem Verfahren.

2. Verfahren nach Anspruch 1, **dadurch gekennzeichnet, dass** der physikalische Trennschritt eine Druckwechsel-Adsorption beinhaltet.

3. Verfahren nach Anspruch 1 oder 2, **dadurch gekennzeichnet, dass** in Schritt (f) erhaltenes Abgas und in Schritt (e) erhaltenes Kohlenmonoxid und Wasserstoff über einen gemeinsamen Gaskompressor auf Absorptionsdruck verdichtet und zu Schritt (d) zurückgeführt werden.

4. Verfahren nach einem der vorhergehenden Ansprüche, **dadurch gekennzeichnet, dass** das in Schritt (f) erhaltene Abgas teilweise als Brennstoff bei der Herstellung des Synthesegases genutzt wird.

5. Verfahren nach einem der vorhergehenden Ansprüche, **dadurch gekennzeichnet, dass** das in Schritt (f) erhaltenes Abgas einem weiteren Absorptionsschritt mit gekühltem Absorptionsmittel unterzogen wird, wobei ein zumindest teilweise von Kohlendioxid befreites Abgas erhalten wird, sowie ein weiteres mit Kohlendioxid und teilweise mitabsorbiertem Kohlenmonoxid und Wasserstoff beladenes Absorptionsmittel erhalten wird, und das teilweise von Kohlendioxid befreite Abgas auf Absorptionsdruck verdichtet und zu Schritt (d) zurückgeführt wird.

6. Verfahren nach Anspruch 5, **dadurch gekennzeichnet, dass** das weitere mit Kohlendioxid und teilweise mitabsorbiertem Kohlenmonoxid und Wasserstoff beladene Absorptionsmittel in der Mehrzahl hintereinander geschalteter flash-Stufen gemäß Schritt (e) behandelt wird.

7. Verfahren nach einem der vorhergehenden Ansprüche, **dadurch gekennzeichnet, dass** das Synthesegas Wasser (H₂O) als weitere Komponente beinhaltet.

8. Verfahren nach Anspruch 7, **dadurch gekennzeichnet, dass** in einem Schritt (e) nachgeschalteten Destillationsschritt Wasser aus dem Absorptionsmittel entfernt wird.

9. Verfahren nach Anspruch 7, **dadurch gekennzeichnet, dass** im Destillationsschritt erhaltene Absorptionsmitteldämpfe als Stripp-Medium zum Entfernen von Kohlendioxid in der nachgeschalteten flash-Stufe gemäß Schritt (e) genutzt werden.

10. Verfahren nach Anspruch 8 oder 9, **dadurch gekennzeichnet, dass** in Schritt (g) erhaltene Kompressionswärme zum direkten oder indirekten Beheizen des Absorptionsmittels im Destillationsschritt genutzt wird.

11. Verfahren nach einem der Ansprüche 7 bis 10, **dadurch gekennzeichnet, dass** das Wasser zumindest teilweise aus dem Synthesegas durch Kühlen des Synthesegases unter den Taupunkt von Wasser und Abscheiden des kondensierten Wassers entfernt wird.

12. Verfahren nach einem der vorhergehenden Ansprüche, **dadurch gekennzeichnet, dass** in Schritt (g) erhaltene Kompressionswärme beim Behandeln des beladenen Absorptionsmittels in der Mehrzahl hintereinander geschalteter flash-Stufen gemäß Schritt (e) zum Erwärmen des beladenen Absorptionsmittels genutzt wird.

13. Verfahren nach einem der vorhergehenden Ansprüche, **dadurch gekennzeichnet, dass** das physikalisch wirkende Absorptionsmittel hygroskopisch ist.

14. Verfahren nach einem der vorhergehenden Ansprüche, **dadurch gekennzeichnet, dass** das physikalisch wirkende Absorptionsmittel Methanol beinhaltet, oder im Wesentlichen aus Methanol besteht, oder aus Methanol besteht.

15. Verfahren nach einem der Ansprüche 1 bis 13, **dadurch gekennzeichnet, dass** das physikalisch wirkende Absorptionsmittel N-Methyl-2-pyrrolidon (NMP) beinhaltet, oder im Wesentlichen aus NMP besteht, oder aus NMP besteht.

16. Verfahren nach einem der vorhergehenden Ansprüche, **dadurch gekennzeichnet, dass** das Synthesegas in einem dem Verfahren vorgeschalteten Verfahrensschritt einer Wassergas-Shift-Reaktion zur Erhöhung der Wasserstoffausbeute unterzogen wird, wobei sich das Synthesegas mit Wasser und Kohlendioxid anreichert.

17. Anlage zur Herstellung von Wasserstoff (H₂) und zur Abtrennung von Kohlendioxid aus Synthesegas, umfassend die folgenden Anlagenkomponenten:
(a) Mittel zum Bereitstellen von Synthesegas, wobei das Synthesegas zumindest Wasserstoff (H₂), Kohlenmonoxid (CO) sowie Kohlendioxid (CO₂) beinhaltet;
(b) Mittel zum Bereitstellen eines physikalisch wirkenden Absorptionsmittels;
(c) Mittel zum Kühlen des Synthesegases und des Absorptionsmittels;
(d) Eine Absorptionskolonne zum Führen des gekühlten Synthesegases und des gekühlten Absorptionsmittels bei erhöhtem Druck im Gegenstrom, zur Entfernung von Kohlendioxid aus dem Synthesegas, wobei zumindest teilweise von Kohlendioxid befreites Synthesegas erhältlich ist, sowie mit Kohlendioxid und teilweise mitabsorbiertem Kohlenmonoxid und Wasserstoff beladenes Absorptionsmittel erhältlich ist;
(e) Eine Mehrzahl hintereinander geschalteter flash-Stufen, beinhaltend eine erste flash-Stufe zur Entfernung des mitabsorbierten Kohlenmonoxid und Wasserstoff aus dem beladenen Absorptionsmittel, sowie beinhaltend eine der ersten flash-Stufe nachgeschaltete flash-Stufe zur Entfernung von Kohlendioxid aus dem beladenen Absorptionsmittel;
(f) Eine Vorrichtung zum Abtrennen von Wasserstoff aus dem zumindest teilweise von Kohlendioxid befreiten Synthesegas in einem physikalischen Trennschritt, wobei Wasserstoff als Produktgas sowie ein Wasserstoff, Kohlenmonoxid und Kohlendioxid aufweisendes Abgas erhältlich sind;
(g) Ein Kompressor zum Verdichten des in der ersten flash-Stufe erhältlichen Kohlenmonoxid und Wasserstoff und des in der Vorrichtung (f) erhältlichen Abgases, sowie zum Rückführen des in der ersten flash-Stufe erhältlichen Kohlenmonoxid und Wasserstoff und des in der Vorrichtung (f) erhältlichen Abgases zur Absorptionskolonne (d).
(h) Mittel zum Ausschleusen des in der Vorrichtung (f) erhältlichen Produktgases (Wasserstoff) und des in der nachgeschalteten flash-Stufe erhältlichen Kohlendioxids aus der Anlage.

18. Anlage nach Anspruch 17, **dadurch gekennzeichnet, dass** die Vorrichtung (f) eine Einheit zur Druckwechsel-Adsorption beinhaltet.

19. Anlage nach einem der Ansprüche 17 oder 18, **dadurch gekennzeichnet, dass** die Anlage eine weitere Absorptionskolonne zum Führen des in der Vorrichtung (f) erhältlichen Abgases und von gekühltem Absorptionsmittel im Gegenstrom beinhaltet, wobei zumindest teilweise von Kohlendioxid befreites Abgas erhältlich ist, sowie ein weiteres mit Kohlendioxid und teilweise mitabsorbiertem Kohlenmonoxid und Wasserstoff beladenes Absorptionsmittel erhältlich ist.

20. Verwendung des Verfahrens nach einem der Ansprüche 1 bis 16 oder der Anlage nach einem der Ansprüche 17 bis 19 zur Abscheidung von Kohlendioxid aus schwefelfreiem Synthesegas.
